# EUROPEAN PATENT APPLICATION

(11) **EP 1 986 034 A1**
(43) Date of publication of application: **29.10.2008**
(21) Application number: 08007606.0
(22) Date of filing: 18.04.2008
(51) Int. Cl.: G02C 5/16, G02C 5/22

(54) **Spring hinge for glasses**

(30) Priority: 26.04.2007 CN 200710074160
(71) Applicant: Elegance Optical MFY, Longgang District Shenzhen City Guangdong 518173 (CN)
(72) Inventor: Niu, Shou-Ye, Xi'an City, Shangxi Province, 710043 (CN)
(74) Representative: Walkenhorst, Andreas

(57) **Abstract**

A hinge for glasses includes a hinge part securely attached to a central part, a housing firmly connected to a glasses leg, and a spring-core device received in the housing. The spring-core device includes a core shaft with a securing means, a slide block and a coiled spring disposed around the core shaft, and a single-tooth core body rotatably connected to the hinge part. The single-tooth core body is firmly connected to the core shaft, and the slide block is positioned in the housing. The coiled spring is respectively resisted against the securing means and the slide block. When the glasses leg rotates outwards to a slight angle at a wearing position, the single-tooth core body are pulled outwards to thereby cause the slide block to position in the housing and cause the coiled spring to be compressed.

## Description

### CROSS REFERENCE TO RELATED PATENT APPLICATION

This application claims the priority of the Chinese patent application No. 200710074160.0 with filing date of April 26, 2007.

### BACKGROUND OF THE INVENTION

### 1. Technical Field

The present Invention relates to a hinge for glasses, especially a spring hinge for glasses.

### 2. Description of the related art

Spring hinges are preferably to be used more and more frequently inorder to increase the wearing comfort of glasses. For example, Chinese issued patent CN96192848.4, *Spring hinge for glasses and its manufacturing method*, shows a spring hinge with simple structure and low cost, especially a spring hinge for glasses which has a intermediate piece and two side pieces of glasses hinged with it. The spring hinge contains a spring housing corresponding with the side pieces of glasses and a coactive intermediate hinge piece, on which the intermediate piece is fixed. The spring housing has a longitudinally extended groove with a continuous through inwall. The spring housing can be pressed in the groove of a locking ring, which is supported by the groove and used as a lock, and thus the locking ring is fixed in the groove to secure against axial displacement. The spring hinge is characterized in that the spring housing is made by means of metal-powder compression casting. Its disadvantage is that the housing uses a concave locking ring, which degrades the glasses' appearance.

In addition, another Chinese patent CN02217242.4, *Close-type spring hinge for glasses*, shows a spring hinge including a bird-head-like hinge part, a core unit, screws, a core, a hinge and a spring. There Is a circlip within the hinge and outside the core. Its disadvantage is the housing is hard to manufacture.

What is needed, therefore, is a spring hinge for glasses which is readily assemblied for manufacturers and reliably used for users.

### SUMMARY OF THE INVENTION

A hinge for glasses includes a hinge part securely attached to a central part, a housing firmly connected to a glasses leg, and a spring-core device received in the housing. The spring-core device includes a core shaft with a securing means, a slide block and a coiled spring disposed around the core shaft, and a single-tooth core body rotatably connected to the hinge part. The single-tooth core body is firmly connected to the core shaft, and the slide block is positioned in the housing. The coiled spring is respectively resisted against the securing means and the slide block. When the glasses leg rotates outwards to a slight angle at a wearing position, the single-tooth core body are pulled outwards to thereby cause the slide block to position in the housing and cause the coiled spring to be compressed.

Other advantages and novel features will become more apparent from the following detailed description of embodiments when taken in conjunction with the accompanying drawings.

### BRIEF DESCRIPTION OF THE DRAWINGS

Many aspects of the present hinge for glasses can be better understood with reference to the following drawings. The components in the drawings are not necessarily drawn to scale, the emphasis instead being placed upon dearly illustrating the principles of the present hinge for glasses.

FIG. 1 is a longitudinal sectional view of the hinge for glasses in accordance with a first embodiment of the present invention;

FIG. 2 is an exploded, perspective view of a main part of the hinge for glasses in accordance with the first embodiment of the present invention;

FIG. 3 is a partial longitudinal sectional view of a single-tooth core body of the hinge for glasses in FIG.2;

FIG. 4 is a longitudinal sectional view of a slide block of the hinge for glasses in FIG.2;

FIG. 5 is a schematic assembly view of the single-tooth core body, the slide block, a coiled spring, and a core shaft in accordance with the first embodiment of the present invention;

FIG. 6 is another schematic assembly view of the single-tooth core body, the slide block, the coiled spring, and the core shaft in accordance with the first embodiment of the present invention;

FIG. 7 is an isometric, perspective view of the hinge for glasses in accordance with the first embodiment of the present invention;

FIG. 8 is a longitudinal sectional view of the hinge for glasses in accordance with a second embodiment of the present invention;

FIG. 9 is a longitudinal sectional view of the hinge for glasses in accordance with a third embodiment of the present invention; and

FIG. 10 is a longitudinal sectional view of the hinge for glasses in accordance with a fourth embodiment of the present invention.

### DETAILED DESCRIPTION OF THE INVENTION

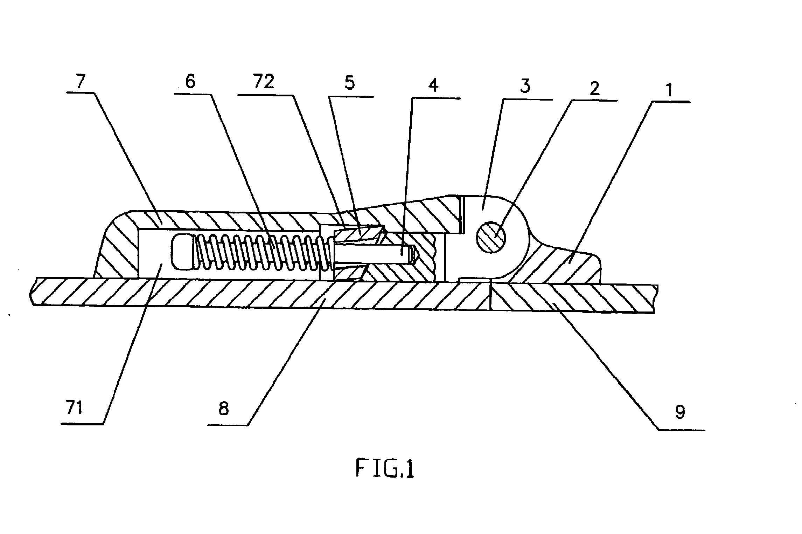

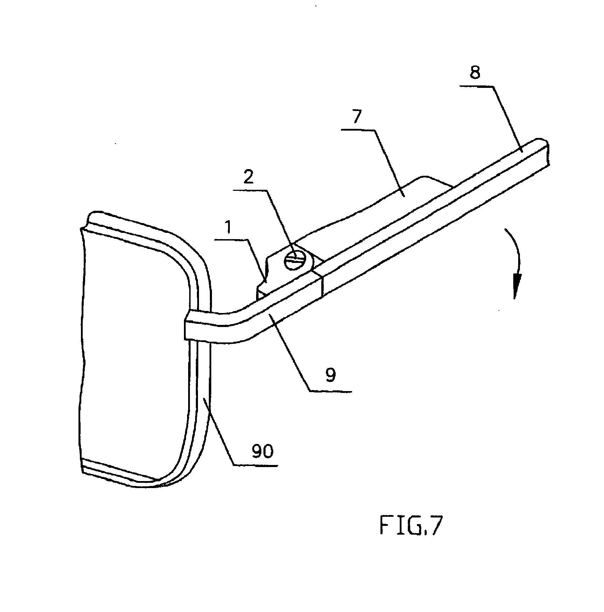

Referring to FIGS. 1 and 7, a hinge for glasses in accordance with a first embodiment of the present Invention includes a bird-head-like hinge part 1, a housing 7 connected with a glasses leg 8, a spring-core device, and a screw 2. The spring-core device mentioned above includes a core shaft 4 with a securing means on one end, a coiled spring 6 and a slide block 5 enclosing the core shaft 4, and a single-tooth core body 3 firmly connected with the core shaft 4. The bird-head-like hinge part 1 may be securely connected to a central part 9 or integrally molded with the central part 9. The central part 9 is firmly connected to a glasses frame 90 (as shown in FIG. 7) by electric welding or other securing means. The housing 7 is a half one, and an inner side of the housing 7 and the glasses leg 8 cooperatively form a cavity 71 in which the spring-core device is arranged, and a groove 72 is defined in the cavity 71. Furthermore, the slide block 5 can be only moved in the groove 72 after the slide block 5 is assembled.

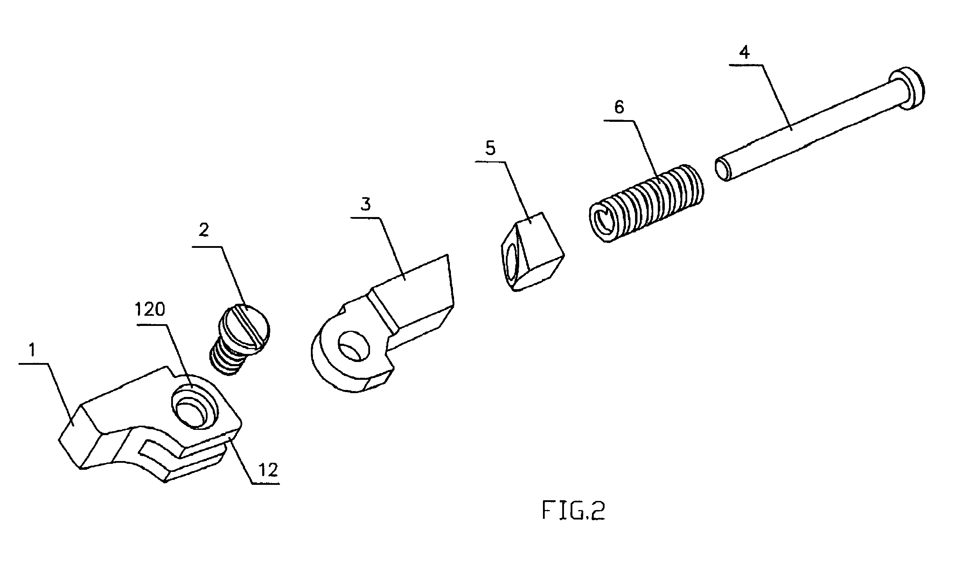

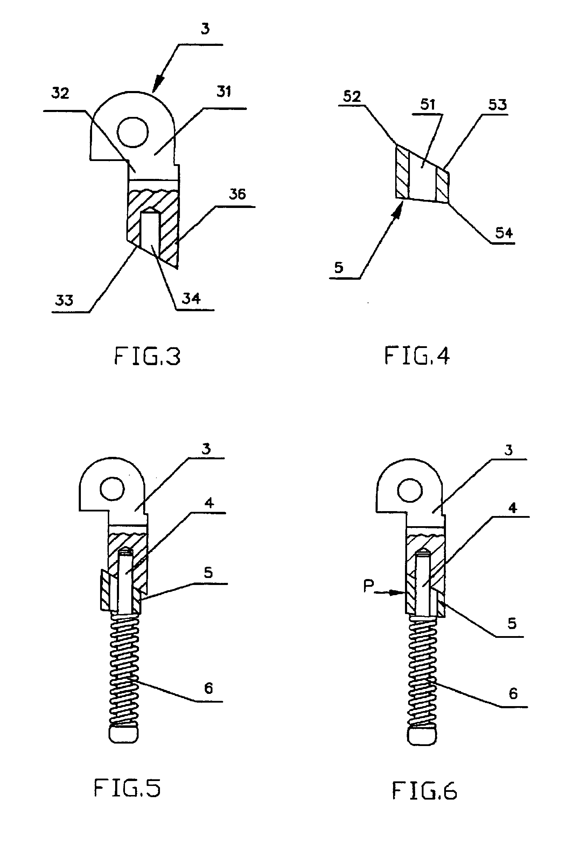

FIG. 2 shows an exploded, perspective view of a main part of the hinge for glasses in accordance with the first embodiment of the present invention. Referring to FIGS. 2 , 3 and 4, the bird-head-like hinge part 1 is formed to have a pair of opposite, spaced protruding blocks 12. Each protruding block 12 defines a screw hole 120 therein for extension of the screw 2 therethrough. The single-tooth core body 3 have an upper portion 31 and a lower portion 36, as shown in FIG 3. The upper portion 31, whose top is semicircular and oblate, is thinner than the lower portion 36 of the single-tooth core body 3. The upper portion 31 defines a lateral through hole 32 for the screw 2 to connect the single-tooth core body 3 and the bird-head-like hinge part 1 (double-tooth). The lower portion 36 is a thicker flat cubic, and a bottom of the lower portion 36 is an incline 33, on which there Is a blind hole 34 for connecting the core shaft 4, along the axial direction of the single-tooth core body 3. As Illustrated in FIG.4, a longitudinal section of the slide block 5 is a quadrilateral. An upper end face 53 of the slide block 5 is an Incline and there is a through hole 51 in the slide block 5 along the axial direction for extension of the core shaft 4 therethrough. A corner of the upper end of the slide block 5 is designed as a sharp corner 52, and a diagonal corner of the lower end is also a sharp corner 54. A fore-end of the core shaft 4 can be inserted in the blind hole 34 to thereby firmly connect the singie-tooth core body 3 with the core shaft 4. If the fore-end of the core shaft 4 in the spring-core device is threaded, correspondingly, the blind hole 34 of the single-tooth core body 3 is also threaded. A rear-end of the core shaft 4 can prevent the coiled spring 6 from moving when the coiled spring 6 is disposed on the core shaft 4.

Referring to FIGS. 5 and 6, in assembly, the coiled spring 6 is first displaced around the core shaft 4, and then slide block 5 is also disposed around the core shaft 4. Further, the fore-end of the core shaft 4 is inserted into the blind hole 34 of the single-tooth core body 3 along the axial direction to thereby firmly connect the single-tooth core body 3 with the core shaft 4. At the beginning, the slide block 5 moves upwards and laterally along the incline 33 of the single-tooth core body 3 to protrude outwards the single-tooth core body 3. Apply lateral force P on the slide block 5, it can go back to align the side face of the single-tooth core body 3. Meanwhile, the coiled spring 6 is compressed. With reference to FIG. 1, when mounting the spring-core device into the housing 7, first slightly press the slide block 5 to make its side face align to the side face of the single-tooth core body 3. When the spring-core device is well accommodated in the cavity 71 of the housing 7, the slide block 5 automatically moves upwards and laterally along the incline 33 into the groove 72 due to the coiled spring 6. Thus, the spring-core device is forevermore accommodated in the housing 7 except that the housing 7 is broken. Finally, the bird-head-like hinge part 1 and the single-tooth core body 3 are connected by the screw 2.

With reference to FIG 7, when the glasses leg 8 is rotated to a slight angle along the arrow direction at a wearing position and the central part 9 keep immovable, the single-tooth core body 3 and the core shaft 4 can be moved in the cavity 71. Then the sharp corner 52 of the slide block 5 is fixed in the groove 72 and the lower sharp corner 54 abutts against the inwall of the glasses leg 8, so the whole spring-core device is movably locked in the housing 7. The slide block 5 is immobilized at this time, however, the single-tooth core body 3 and the core shaft 4 can be moved in the housing 7 along the axial direction. Meanwhile, the coiled spring 6 is compressed. At the moment, when a user wears the glasses, the glasses leg 8 can slightly press on the head of the user due to recovery of electicity of the coiled spring 6 so that the glasses is prevented from easily falling off. As such, when the central part 9 is rotated along the reverse arrow direction and the glasses leg 8 keep immovable, the single-tooth core body 3 and the core shaft 4 can be moved in the cavity 71. Then the sharp corner 52 of the slide block 5 is fixed in the groove 72 and the lower sharp corner 54 abutts against the inwall of the glasses leg 8, so the whole spring-core device is locked in the housing 7. The slide block 5 is immobilized at this time, however, the single-tooth core body 3 and the core shaft 4 can be moved in the cavity 71 along the axial direction. Meanwhile, the coiled spring 6 is compressed. At the moment, when a user wears the glasses, the glasses leg 8 can slightly press on the head of the user due to recovery of electicity of the coiled spring 6 so that the glasses is prevented from easily falling off.

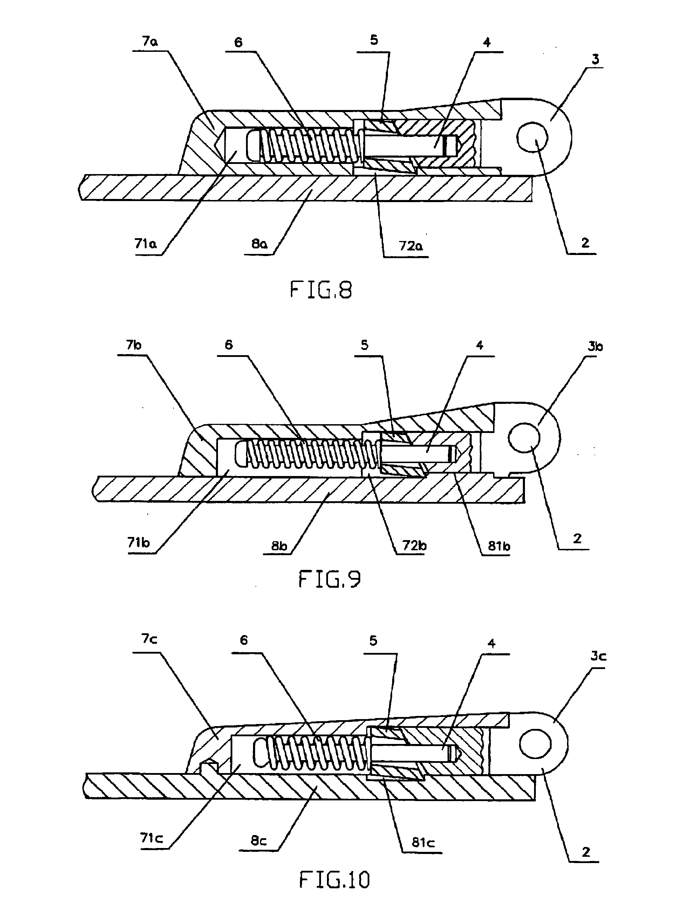

Referring to FIG 8, a hinge for glasses in accordance with a second embodiment of the present invention is similar to the hinge for glasses in accordance with the first embodiment of the present invention. The hinge for glasses includes a bird-head-like hinge part 1 (not shown in FIG 8), a housing 7a connected with a glasses leg 8a, a spring-core device, and a screw 2. The spring-core device includes a core shaft 4 with a securing means on one end, a coiled spring 6 and a slide block 5 enclosing the core shaft 4, and a single-tooth core body 3a firmly connected with the core shaft 4. The screw 2, the core shaft 4, the slide block 5, and the coiled spring 6 in the second embodiment are the same to the corresponding members in the first embodiment, so their labels are not changed. The housing 7a is an entire one, and defines a cavity 71a in which the spring-core device is arranged. A through hole 72a is defined in the back wall of the housing 7a. The thr ough hole 72a of the housing 7a and the glasses leg 8a cooperatively forms a groove. Furthermore, the slide block 5 can be only moved in the groove after the slide block 5 is assembled. The movement of the hinge for glasses in the second embodiment is substaintially same to the hinge for glasses in the first embodiement.

Referring to FIG 9, a hinge for glasses in accordance with a third embodiment of the present invention is similar to the hinge for glasses In accordance with the second embodiment of the present invention. The hinge for glasses includes a bird-head-like hinge part 1 (not shown in FIG 9), a housing 7b connected with a glasses leg 8b, a spring-core device, and a screw 2. The spring-core device includes a core shaft 4 with a securing means on one end, a coiled spring 6 and a slide block 5 enclosing the core shaft 4, and a single-tooth core body 3b firmly connected with the core shaft 4. The screw 2, the core shaft 4, the slide block 5, and the coiled spring 6 in the third embodiment are the same to the corresponding members in the first embodiment, so their labels keep unchanged. The housing 7b is a half one, and the housing 7b and the glasses leg 8b cooperatively form a cavity 71b in which the spring-core device is arranged, and a groove 72b is defined in the cavity 71 b for the slide block 5 to move or wedge in. Furthermore, the slide block 5 can be only moved in the groove 72b after the slide block 5 is assembled beacuse a projection 81b of the glasses leg 8b prevent the a sharp corner 52 of the slide block 5 from moving outwards. The movement of the hinge for glasses in the third embodiment is substaintially same to the hinge for glasses in the second embodiement.

Referring to FIG. 10, a hinge for glasses in accordance with a fourth embodiment of the present invention is similar to the hinge for glasses in accordance with the third embodiment of the present invention. The hinge for glasses includes a bird-head-like hinge part 1 (not shown in FIG. 10), a housing 7c connected with a glasses leg 8c, a spring-core device, and a screw 2. The spring-core device includes a core shaft 4 with a securing means on one end, a coiled spring 6 and a slide block 5 enclosing the core shaft 4, and a single-tooth core body 3c firmly connected with the core shaft 4. The screw 2, the core shaft 4, the slide block 5, and the coiled spring 6 in the third embodiment are the same to the corresponding members in the first embodiment, so their labels keep unchanged. The housing 7c is a half one, and the housing 7c and the glasses leg 8c cooperatively form a cavity 71c in which the spring-core device is arranged, and a groove is defined in the cavity 71b for the slide block 5 to move or wedge in. Furthermore, the slide block 5 can be only moved in the groove after the slide block 5 is assembled, beacuse a slot 81c, defined in the glasses leg 8c prevent the a sharp corner 52 of the slide block 5 from moving outwards. The movement of the hinge for glasses in the third embodiment is substaintially same to the hinge for glasses in the second embodiement.

It is believed that the present embodiments and their advantages will be understood from the foregoing description, and it will be apparent that various changes may be made thereto without departing from the spirit and scope of the invention or sacrificing all of its material advantages, the examples hereinbefore described merely being preferred or exemplary embodiments of the present invention.

## Claims

1. A hinge for glasses wherein the glasses have a central part and a glasses leg, the hinge comprising:
a hinge part securely attached to the central part;
a housing firmly connected to the glasses leg; and
a spring-core device received in the housing, the spring-core device comprising:
a core shaft with a securing means on one end;
a slide block enclosed the core shaft;
a coiled spring disposed around the core shaft, one end of the coiled spring resisted against the securing means of the core shaft and the other end of the coiled spring resisted against the slide block; and
a single-tooth core body rotatably connected to the hinge part, wherein the single-tooth core body firmly connected with the other end of the core shaft, and the slide block is positioned in the housing;
wherein when the glasses leg rotates outwards to a slight angle at a wearing position, the single-tooth core body are pulled outwards to thereby cause the slide block to position in the housing and cause the coiled spring to be compressed.

2. The hinge for glasses according to claim 1, wherein the housing and the glasses leg cooperatively form a cavity in which the spring-core device is arranged.

3. The hinge for glasses according to claim 2, wherein a groove is defined in the cavity for receiving and positioning the slide block therein.

4. The hinge for glasses according to claim 1, wherein the slide block is a quadrilateral, and a through hole is defined in the slide block along the axial direction for extension of the core shaft therethrough.

5. The hinge for glasses according to claim 4, wherein an upper end face of the slide block is an incline corresponding to an incline formed on the single-tooth core body, a corner of the upper end of the slide block is designed as a sharp corner, and a diagonal corner of the lower end of the slide block is a sharp corner.

6. The hinge for glasses according to claim 5, wherein a blind hole is defined in the incline of the single-tooth core body for firmly connecting a fore-end of the core shaft.

7. The hinge for glasses according to claim 1, wherein the hinge part is formed to have a pair of opposite, spaced protruding blocks, each protruding block defines a screw hole therein for extension of a screw therethrough.

8. The hinge for glasses according to claim 7, wherein an upper portion of the single-tooth core body inserts between the spaced protruding blocks and defines a lateral through hole for extension of the screw therethrough, thereby connecting the single-tooth core body with the hinge part.

9. A hinge for glasses comprising:
a hinge part securely attached to a glasses frame;
a housing firmly connected to a glasses leg; and
a spring-core device received in the housing, the spring-core device comprising:
a core shaft;
a slide block displaced around the core shaft;
a coiled spring dispose d around the core shaft, the coiled spring resisted against the slide block and the core shaft; and
a single-tooth core body rotatably connected to the hinge part, wherein the single-tooth core body firmly connected with the core shaft, and the slide block is restricted to move in the housing;
wherein when the glasses leg rotates outwards to a slight angle at a wearing position, the single-tooth core body are pulled outwards to thereby cause the slide block to position in the housing and cause the coiled spring to be compressed.

10. The hinge for glasses according to claim 9, wherein th e housing and the glasses leg cooperatively form a cavity in which the spring-core device is arranged.

11. The hinge for glasses according to claim 10, wherein a groove is defined in the cavity for receiving the slide block and restricting the slide block to move therein.

12. The hinge for glasses according to claim 9, wherein the slide block is a quadrilateral, and a through hole is defined in the slide block along the axial direction for extension of the core shaft therethrough.

13. The hinge for glasses according to claim 12, wherein an upper end face of the slide block is an incline corresponding to an incline formed on the single-tooth core body, a corner of the upper end of the slide block is designed as a sharp corner, and a diagonal corner of the lower end of the slide block is a sharp corner.

14. The hinge for glasses according to claim 13, wherein a blind hole is defined in the incline of the single-tooth core body for firmly connecting a fore-end of the core shaft.

15. The hinge for glasses according to claim 9, wherein the hinge part is formed to have a pair of opposite, spaced protruding blocks, each protruding block defines a screw hole therein for extension of a screw therethrough.

16. The hinge for glasses according to claim 15, wherein an upper portion of the single-tooth core body inserts between the spaced protruding blocks and defines a lateral through hole for extension of the screw therethrough, thereby connecting the single-tooth core body with the hinge part.

17. A spring hinge for glasses, wherein the glasses have a glasses frame and a glasses leg, and the glasses leg has a housing for receiving the spring hinge, the spring hinge comprising:
a core shaft;
a slide block displaced around the core shaft;
a coiled spring dispose d around the core shaft, the coiled spring resisted against the slide block and the core shaft; and
a single-tooth core body rotatably connected to the glasses frame, wherein the single-tooth core body firmly connected with the core shaft, and the slide block is restricted to move in the housing of the glasses leg;
wherein when the glasses leg rotates outwards to a slight angle at a wearing position, the single-tooth core body are pulled outwards to thereby cause the slide block to position in the housing and cause the coiled spring to be compressed.

18. The spring hinge for glasses according to claim 17, wherein a groove is defined in the housing for receiving the slide block and restricting the slide block to move therein.

19. The spring hinge for glasses according to claim 18, wherein the slide block is a quadrilateral, and a through hole is defined in the slide block along the axial direction for extension of the core shaft therethrough.

20. The spring hinge for glasses according to claim 19, wherein an upper end face of the slide block is an incline corresponding to an incline formed on the single-tooth core body, a corner of the upper end of the slide block is designed as a sharp corner, and a diagonal corner of the lower end of the slide block is a sharp corner.
